# EUROPÄISCHE PATENTSCHRIFT

(11) **EP 1 152 195 B1**
(45) Veröffentlichungstag und Bekanntmachung des Hinweises auf die Patenterteilung: **11.08.2004**
(21) Anmeldenummer: 01110461.9
(22) Anmeldetag: 27.04.2001
(51) Int. Cl.: F25B 41/06

(54) **Verfahren zum Betreiben einer (Verbund) Kälteanlage**
Method for operating a (compound) refrigeration system
Procédé d'utilisation d'un système frigorifique (de type complexe)

(30) Priorität: 04.05.2000 DE 10021610
(43) Veröffentlichungstag der Anmeldung: 07.11.2001
(73) Patentinhaber: Linde Kältetechnik GmbH & Co.KG, 50999 Köln (DE)
(72) Erfinder: Koch, Klaus, 44534 Lünen (DE)
(74) Vertreter: Zahn, Christoph

(56) Entgegenhaltungen:
- EP-A- 0 378 152
- WO-A-96/06316
- DE-A- 4 100 749
- DE-A- 19 706 663
- US-A- 2 242 334
- US-A- 2 319 005
- US-A- 5 941 086
- US-A- 5 966 950

## Beschreibung

Die Erfindung betrifft ein Verfahren zum Betreiben einer Verbundkälteanlage oder einer Kälteanlage mit wenigstens einem Verdampfer und wenigstens einem Verdichter, wobei dem Verdampfer ein Kältemittel oder Kältemittelgemisch geregelt über ein thermostatisches Expansionsventil zugeführt wird und die Regelung des thermostatischen Expansionsventils mittels einer Erfassung eines geeigneten Temperaturwertes erfolgt.

Bei gattungsgemäßen Verfahren zum Betreiben einer Verbundkälteanlage oder einer Kälteanlage - im Folgenden nur mehr Verbundkälteanlage genannt - wird der Kältebedarf der einzelnen Verdampfer bzw. Kühlstellen dadurch abgedeckt, dass die Flüssigkeitszufuhr zu dem entsprechenden Verdampfer bzw. zu der entsprechenden Kühlstelle zu- oder abgeschaltet wird.

Bei Verbundkälteanlagen führt diese Verfahrensweise jedoch zu Nachteilen, wie sie im Folgenden näher erläutert werden. Wird die Flüssigkeitszufuhr zu einem Verdampfer unterbrochen, so wird dieser Verdampfer durch den oder die Verdichter abgesaugt und der Saugdruck fällt. Da die Leistungsstufen der Verbundkälteanlagen über den Parameter Saugdruck gesteuert werden, kommt es bei dieser Verfahrensweise zu einem Abschalten aller oder zumindest einzelner Verdichter. Wird dem Verdampfer nach einiger Zeit wieder Flüssigkeit zugeführt, so wird der Verdampfer - da das zugeordnete Ventil vollständig geöffnet ist - sehr schnell überfüllt. Sobald der Fühler des Einspritzventils diese Überfüllung in dem Verdampfer erkennt, wird das Ventil wieder geschlossen und damit die Zufuhr von weiterer Kältemittel(gemisch)flüssigkeit unterbunden. Dieses Öffnen und Schließen des Ventils wiederholt sich so lange, bis ein voreingestellter Überhitzungswert erreicht ist.

Bei der vorbeschriebenen Verfahrensweise ist der für die Temperaturerfassung erforderliche Fühler des Einspritzventils, der die Kältemitteldampf-Überhitzung erkennt bzw. regelt auf der Saugleitung, also der dem Verdampfer bzw. der Kühlstelle nachgeordneten Leitung angeordnet (siehe z.B. WO 96/06316).

Auf Grund des wiederholten Öffnens und Schließens des Ventils gelangt jedoch unverdampftes Kältemittel(gemisch) über den Verdampfer in die Saugleitung und damit zwangsläufig auch in den oder die Verdichter. Bei dem unverdampften Kältemittel(gemisch) handelt es sich um kleine, mit Dampf ummantelte Flüssigkeitströpfchen. Diese richten im Regelfall zwar an dem Verdichter keinen mechanischen Schaden an, sobald sie jedoch an den Arbeitsventilen mechanisch verdampft werden, tritt der Effekt auf, dass aus dem saugseitig geringen Gasvolumen ein druckseitig sehr großes Gasvolumen resultiert. Ist der Aerosolanteil in dem Kältemitteldampf jedoch zu hoch, kann es zu mechanischen Schäden an den Verdichtem kommen. Auch kann die erwähnte Verdampfung bereits früher auftreten, bspw. saugseitig in dem Verdichtertriebwerk, vorzugsweise an einem "warmen" Bauteil - der auftretende Effekt ist jedoch der Gleiche.

Dies hat zur Folge, dass in Abhängigkeit von der Häufigkeit der Unterbrechung der Flüssigkeitszufuhr zu dem Verdampfer, die Leistungsverluste ansteigen und zudem der bzw. die Verdichter häufiger schalten, woraus eine verringerte Lebensdauer der Verdichter resultiert.

Zur Lösung dieser Aufgabe wird ein Verfahren zum Betreiben einer Verbundkälteanlage oder einer Kälteanlage vorgeschlagen, das dadurch gekennzeichnet ist, dass
- mittels wenigstens einer Messvorrichtung die Erfassung des geeigneten Temperaturwertes in dem Raumluftstrom des Verdampfers erfolgt,
- in Abhängigkeit von dem in der dem Verdampfer zugeführten Rückluft und/oder in Abhängigkeit von dem in der von dem Verdampfer abgeführten Zuluft mittels wenigstens einer Messvorrichtung ermittelten Temperaturwert über wenigstens eine der in dem Raumluftstrom angeordneten Messvorrichtung zugeordnete Heizvorrichtung eine Erwärmung der Messvorrichtung realisiert wird.

Erfindungsgemäß erfolgt die Erfassung des geeigneten Temperaturwertes nunmehr nicht mehr auf der Saugleitung, also der dem Verdampfer bzw. der Kühlstelle nachgeordneten Leitung, sondern in dem Raumluftstrom des Verdampfers bzw. der Kühlstelle. Des Weiteren ist in der dem Verdampfer zugeführten Rückluft und/oder in der von dem Verdampfer abgeführten Zuluft wenigstens eine Messvorrichtung angeordnet, mittels derer die Temperatur(en) der Rückluft und/oder der Zuluft ermittelt werden kann bzw. können.

In Abhängigkeit von dem in der dem Verdampfer zugeführten Rückluft und/oder in Abhängigkeit von dem in der dem Verdampfer abgeführten Zuluft mittels wenigstens einer Messvorrichtung ermittelten Temperaturwert wird sodann über wenigstens eine der in dem Raumluftstrom angeordneten Messvorrichtung zugeordnete Heizvorrichtung eine Erwärmung der Messvorrichtung realisiert. Der in dem Raumluftstrom angeordneten Messvorrichtung wird also ein Störwertsignal aufgegeben, durch das diese Messvorrichtung getäuscht wird - Störwertgeber ist folglich die erwähnte Heizvorrichtung. Diese Täuschung der Messvorrichtung hat zur Folge, dass das thermostatische Expansionsventil, das im Falle der vorbeschriebenen bekannten Verfahrensweise geschlossen bliebe, nunmehr öffnet und die Flüssigkeitszufuhr in den Verdampfer ermöglicht.

Das erfindungsgemäße Verfahren weiterbildend wird vorgeschlagen, dass in Abhängigkeit von der Erwärmung der Messvorrichtung eine Änderung des Saugdruckes des Verdichters derart erfolgt, dass mit steigender Erwärmung der Messvorrichtung der Saugdruck des oder der Verdichter verringert wird. Erfolgt hingegen keine Erwärmung der Messvorrichtung, so wird der Saugdruck des oder der Verdichter erhöht

Mittels dieser Ausgestaltung wird eine Anpassung des Saugdruckes des oder der Verdichter an die jeweils aktuelle Flüssigkeitszufuhr zu dem Verdampfer ermöglicht. Dadurch kann zum einen das erwähnte Absaugen des Verdampfers vermieden und zum anderen das Abschalten des oder der Verdichter zur Gänze unterbunden oder die Häufigkeit des Abschaltens zumindest verringert werden.

Die Leistung der der Messvorrichtung zugeordneten Heizvorrichtung wird - entsprechend einer weiteren vorteilhaften Ausgestaltung des erfindungsgemäßen Verfahrens - in Abhängigkeit von der Abweichung eines Sollwertes geregelt.

In vorteilhafter Weise wird die Leistung der Heizvorrichtung bei Unterschreiten eines Grenzwertes begrenzt, wobei der Grenzwert als Sauggastemperatur am Verdampferaustritt minus Sattdampftemperatur entsprechend dem Saugdruck des oder der Verdichter definiert ist. Hierbei wird die Sauggastemperatur vorzugsweise mittels einer auf der dem Verdampfer nachgeschalteten Leitung angeordneten Messvorrichtung erfasst.

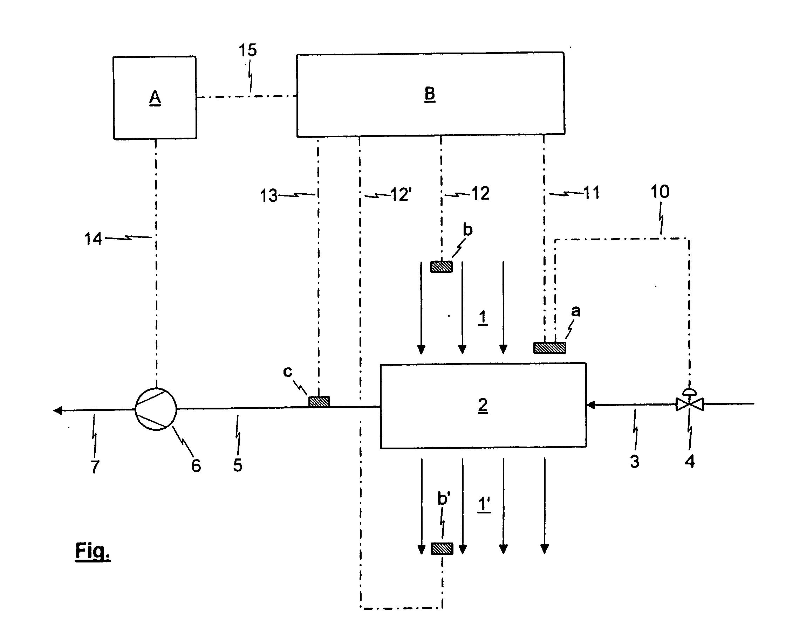

Das erfindungsgemäße Verfahren zum Betreiben einer Verbundkälteanlage oder einer Kälteanlage sei anhand des in der Figur dargestellten, schematisierten Ausführungsbeispieles näher erläutert.

Die Figur zeigt einen Verdampfer 2, dem über eine Leitung 3 Kältemittel oder ein Kältemittelgemisch zugeführt wird. In der Leitung 3 ist ein thermostatisches Einspritzventil 4 angeordnet, dass die Menge des in den Verdampfer 2 einzuspritzenden Kältemittel(gemische)s auf den Verdampfungsdruck entspannt und regelt. Über die Leitung 5 - die sog. Sauggasleitung - wird das Kältemittel(gemisch) aus dem Verdampfer 2 mittels des Verdichters 6 abgesaugt. Der Übersichtlichkeit halber ist in der Figur lediglich ein Verdichter 6 dargestellt; in der Praxis können mehrere Verdichter parallel und/oder seriell angeordnet sein. Das verdichtete Kältemittel(gemisch) wird anschließend über die Druckleitung 7 einem in der Figur nicht dargestellten Verflüssiger zugeführt.

Über eine Datenleitung 14 steht der Verdichter 6 mit der Verbundsteuerung A in Verbindung. Diese dient der Regelung der Verdichter dahingehend, dass in Abhängigkeit von dem herrschenden Verdampfungsdruck Verdichterstufen zu- oder abgeschaltet werden. Die Verbundsteuerung A steht über eine Datenleitung 15 mit dem Kühlstellenregler B in Verbindung. In der Praxis weist jede Kühlstelle einen separaten Kühlstellenregler auf, wobei dieser die Funktionen des oder der Verdampfer sowie des oder der thermostatischen Einspritzventile der Kühlstelle erfasst und regelt.

Dem thermostatischen Einspritzventil 4 ist ein in der Figur nicht dargestelltes, ebenfalls mit dem Kühlstellenregler B verschaltetes Magnetventil vorgeschaltet. Dieses ist erforderlich, um ein automatisches Abschalten der Kühlstelle sowie eine Unterbrechung der Kältemittel(gemisch)zufuhr im Falle einer nicht ausreichenden Überhitzung gewährleisten zu können.

Erfindungsgemäß ist nunmehr wenigstens eine Messvorrichtung a in dem Raumluftstrom des Verdampfers 2 angeordnet. Die Messvorrichtung a steht über eine Datenleitung 10 mit dem thermostatischen Einspritzventil 4 und über eine Datenleitung 11 mit dem Kühlstellenregler B in Verbindung. Der Messvorrichtung a ist zudem eine Heizvorrichtung zugeordnet. Diese in der Figur nicht dargestellte Heizvorrichtung ist wärmeleitend mit dem Fühler des thermostatischen Einspritzventils 4 verbunden und wird von dem Kühlstellenregler B in Abhängigkeit von der Sollwertabweichung mit einer variablen Spannung versorgt.

In dem Rückluft- sowie Zuluftbereich 1 bzw. 1' sind zwei weitere Messvorrichtungen b und b' angeordnet. Diese stehen über die Datenleitungen 12 und 12' ebenfalls mit dem Kühlstellenregler B in Verbindung.

Auf der Saugleitung 5 ist eine weitere Messvorrichtung c angeordnet, die über die Datenleitung 13 mit dem Kühlstellenregler B in Verbindung steht.

Erfindungsgemäß erfolgt nunmehr die Erfassung des Temperaturwertes, über den das thermostatische Expansionsventil 4 gesteuert wird, über die in dem Raumluftstrom des Verdampfers 2 angeordnete Messvorrichtung a. In Abhängigkeit von dem in der dem Verdampfer 2 zugeführten Rückluft 1 und/oder in Abhängigkeit von dem in der von dem Verdampfer 2 abgeführten Zuluft 1' werden mittels der Messvorrichtungen b und b' die Temperaturen der Rück- bzw. Zuluft erfasst. Es ist daher ausreichend, wenn eine Erfassung der Temperatur über lediglich eine der Messvorrichtungen b und b' erfolgt.

Über die der Messvorrichtung a zugeordnete Heizvorrichtung wird sodann in Abhängigkeit dieser Temperatur(en) eine Erwärmung der Messvorrichtung a realisiert. Durch dieses mittels der Heizvorrichtung auf die Messvorrichtung a aufgegebene Störwertsignal wird die Messvorrichtung a getäuscht; dies hat zur Folge, dass das thermostatische Expansionsventil 4 geöffnet wird.

Parallel dazu kann in Abhängigkeit von der Erwärmung der Messvorrichtung a eine Änderung des Saugdruckes des Verdichters 6 dahingehend erfolgen, dass mit steigender Erwärmung der Messvorrichtung a der Saugdruck des Verdichters 6 verringert wird. Hierzu ist es erforderlich, dass der Kühlstellenregler B mit der Verbundsteuerung A über die bereits erwähnte Leitung 15 in Verbindung steht, da die Regelung des Verdichters 6 über die Verbundsteuerung A erfolgt. Kommt ein nicht leistungsgeregelter Verdichter zum Einsatz, so ist eine Steuerung des Verdichtersaugdruckes über die Verbundsteuerung nicht möglich; es sind daher Verdichter mit wenigstens zwei Leistungsstufen oder wenigstens zwei Verdichter erforderlich.

Mittels der Messvorrichtung c, die auf der Saugleitung 5 angeordnet ist, wird die Sauggastemperatur erfasst. Bei Erreichen eines voreingestellten Wertes der Sauggastemperatur wird die Leistung der der Messvorrichtung a zugeordneten Heizvorrichtung begrenzt bzw. diese Heizvorrichtung abgeschaltet. Sollte ein voreingestellter Grenzwert dennoch nicht unterschritten werden, wird über den Kühlstellenregler B das dem thermostatischen Expansionsventil 4 vorgeschaltete Magnetventil abgeschaltet bzw. geschlossen.

Das erfindungsgemäße Verfahren zum Betreiben einer Verbundkälteanlage oder einer Kälteanlage ermöglicht - bei Verwendung von Standardkomponenten - eine stetige Regelung und Leistungsanpassung an den jeweiligen, aktuellen Betriebszustand. Des Weiteren wird die Schalthäufigkeit des bzw. der Verdichter deutlich verringert. Zudem werden die durch das Zu- und Abschalten der Flüssigkeitszufuhr verursachten hydraulischen Schläge in den Leitungen vermieden. Des Weiteren ist über diese Ausgestaltung eine "Femverstellung" des Verdampferfüllungsgrades möglich; und dies, obwohl ein thermostatisches - also rein mechanisches - Expansionsventil verwendet wird.

## Patentansprüche

1. Verfahren zum Betreiben einer Verbundkälteanlage oder einer Kälteanlage mit wenigstens einem Verdampfer und wenigstens einem Verdichter, wobei dem Verdampfer ein Kältemittel oder Kältemittelgemisch geregelt über ein thermostatisches Expansionsventil zugeführt wird und die Regelung des thermostatischen Expansionsventils mittels einer Erfassung eines geeigneten Temperaturwertes erfolgt, **dadurch gekennzeichnet, dass**
- mittels wenigstens einer Messvorrichtung (a) die Erfassung des geeigneten Temperaturwertes in dem Raumluftstrom des Verdampfers (2) erfolgt,
- in Abhängigkeit von dem in der dem Verdampfer (2) zugeführten Rückluft (1) und/oder in Abhängigkeit von dem in der von dem Verdampfer (2) abgeführten Zuluft (1') mittels wenigstens einer Messvorrichtung (b, b') ermittelten Temperaturwert über wenigstens eine der in dem Raumluftstrom angeordneten Messvorrichtung (a) zugeordnete Heizvorrichtung eine Erwärmung der Messvorrichtung (a) realisiert wird.

2. Verfahren zum Betreiben einer Verbundkälteanlage oder einer Kälteanlage nach Anspruch 1, **dadurch gekennzeichnet, dass** in Abhängigkeit von der Erwärmung der Messvorrichtung (a) eine Änderung des Saugdruckes des Verdichters (6) derart erfolgt, dass mit steigender Erwärmung der Messvorrichtung (a) der Saugdruck des oder der Verdichter (6) verringert wird.

3. Verfahren zum Betreiben einer Verbundkälteanlage oder einer Kälteanlage nach Anspruch 1 oder 2, **dadurch gekennzeichnet, dass** die Leistung der der Messvorrichtung (a) zugeordneten Heizvorrichtung in Abhängigkeit von der Abweichung eines Sollwertes geregelt wird.

4. Verfahren zum Betreiben einer Verbundkälteanlage oder einer Kälteanlage nach einem der vorhergehenden Ansprüche, **dadurch gekennzeichnet, dass** die Leistung der Heizvorrichtung bei Unterschreiten eines Grenzwertes begrenzt wird, wobei der Grenzwert als Sauggastemperatur am Verdampferaustritt minus Sattdampftemperatur entsprechend dem Saugdruck des oder der Verdichter definiert ist.

5. Verfahren zum Betreiben einer Verbundkälteanlage oder einer Kälteanlage nach Anspruch 4, **dadurch gekennzeichnet, dass** die Sauggastemperatur mittels einer auf der dem Verdampfer (2) nachgeschalteten Leitung (5) angeordneten Messvorrichtung (c) erfasst wird.

6. Verfahren zum Betreiben einer Verbundkälteanlage oder einer Kälteanlage nach Anspruch 5, **dadurch gekennzeichnet, dass** bei der Unterschreitung eines Grenzwertes der mittels der Messvorrichtung (c) erfassten Sauggastemperatur die Zufuhr des Kältemittel(gemische)s unterbrochen wird.

## Claims

1. Method for operating a compound refrigeration system or a refrigeration system having at least one evaporator and at least one compressor, a refrigerant or refrigerant mixture being fed to the evaporator with closed-loop control via a thermostatic expansion valve, and the closed-loop control of the thermostatic expansion valve being effected by recording of a suitable temperature value, **characterized in that**
- the suitable temperature value is recorded in the room-air stream of the evaporator (2) by means of at least one measurement device (a),
- the measurement device (a) is heated by means of at least one heating device, assigned to the measurement device (a) arranged in the room-air stream, as a function of the temperature value determined in the return air (1) fed to the evaporator (2) and/or as a function of the temperature value determined in the feed air (1') discharged from the evaporator (2) by means of at least one measurement device (b, b').

2. Method for operating a compound refrigeration system or a refrigeration system according to Claim 1, **characterized in that** a change in the suction pressure of the compressor (6) is effected as a function of the heating of the measurement device (a) in such a manner that the suction pressure of the compressor(s) (6) is reduced with increasing heating of the measurement device (a).

3. Method for operating a compound refrigeration system or a refrigeration system according to Claim 1 or 2, **characterized in that** the power of the heating device assigned to the measurement device (a) is controlled as a function of the deviation from a desired value.

4. Method for operating a compound refrigeration system or a refrigeration system according to one of the preceding claims, **characterized in that** the power of the heating device is limited in the event of a limit value being undershot, the limit value being defined as the suction gas temperature at the evaporator outlet minus the saturated steam temperature corresponding to the suction pressure of the compressor(s).

5. Method for operating a compound refrigeration system or a refrigeration system according to Claim 4, **characterized in that** the suction gas temperature is recorded by means of a measurement device (c) arranged on the line (5) connected downstream of the evaporator (2).

6. Method for operating a compound refrigeration system or a refrigeration system according to Claim 5, **characterized in that** the supply of the refrigerant (mixture) is interrupted if a limit value for the suction gas temperature recorded by means of the measurement device (c) is undershot.

## Revendications

1. Procédé de fonctionnement d'une installation frigorifique complexe ou d'une installation frigorifique comprenant au moins un évaporateur et au moins un compresseur, l'évaporateur étant alimenté en réfrigérant ou en mélange réfrigérant de manière régulée par le biais d'une soupape de détente thermostatique, et la régulation de la soupape de détente thermostatique s'effectuant au moyen d'une détection d'une valeur de température appropriée, **caractérisé en ce que**
- la détection de la valeur de température appropriée s'effectue au moyen d'au moins un dispositif de mesure (a) dans le courant d'air spatial de l'évaporateur (2),
- un réchauffement du dispositif de mesure (a) est réalisé en fonction de la valeur de température détectée dans l'air de retour (1) acheminé à l'évaporateur (2) et/ou en fonction de la valeur de température détectée dans l'air d'amenée (1') évacué de l'évaporateur (2) au moyen d'au moins un dispositif de mesure (b, b') par le biais d'au moins un dispositif de chauffage associé au dispositif de mesure (a) disposé dans le courant d'air spatial.

2. Procédé pour le fonctionnement d'une installation frigorifique complexe ou d'une installation frigorifique selon la revendication 1, **caractérisé en ce qu'**une variation de la pression d'aspiration du compresseur (6) s'effectue en fonction du réchauffement du dispositif de mesure (a) de telle sorte que la pression d'aspiration du ou des compresseurs (6) soit réduite avec un réchauffement croissant du dispositif de mesure (a).

3. Procédé pour le fonctionnement d'une installation frigorifique complexe ou d'une installation frigorifique selon la revendication 1 ou 2, **caractérisé en ce que** la puissance du dispositif de chauffage associé au dispositif de mesure (a) est régulée en fonction de l'écart par rapport à une valeur de consigne.

4. Procédé pour le fonctionnement d'une installation frigorifique complexe ou d'une installation frigorifique selon l'une quelconque des revendications précédentes, **caractérisé en ce que** la puissance du dispositif de chauffage est limitée si une valeur limite n'est pas atteinte, la valeur limite étant définie par la température du gaz aspiré à la sortie de l'évaporateur moins la température de saturation de la vapeur en fonction de la pression d'aspiration du ou des compresseurs.

5. Procédé pour le fonctionnement d'une installation frigorifique complexe ou d'une installation frigorifique selon la revendication 4, **caractérisé en ce que** la température du gaz aspiré est détectée au moyen d'un dispositif de mesure (c) disposé sur la conduite (5) montée après l'évaporateur (2).

6. Procédé pour le fonctionnement d'une installation frigorifique complexe ou d'une installation frigorifique selon la revendication 5, **caractérisé en ce que**, si une valeur limite de la température du gaz aspiré détectée au moyen du dispositif de mesure (c) n'est pas atteinte, l'alimentation en (mélange de) réfrigérant est interrompue.
